# EUROPÄISCHE PATENTSCHRIFT

(11) **EP 4 001 131 B1**
(45) Veröffentlichungstag und Bekanntmachung des Hinweises auf die Patenterteilung: **14.08.2024**
(21) Anmeldenummer: 21209047.6
(22) Anmeldetag: 18.11.2021
(51) Int. Cl.: B65B 9/04, B65B 31/02, B65B 31/04, B65B 31/06

(54) **VERPACKUNGSVORRICHTUNG**
PACKAGING DEVICE
DISPOSITIF D'EMBALLAGE

(30) Priorität: 19.11.2020 DE 102020130654
(43) Veröffentlichungstag der Anmeldung: 25.05.2022
(73) Patentinhaber: MULTIVAC Sepp Haggenmüller SE & Co. KG, 87787 Wolfertschwenden (DE)
(72) Erfinder: Kirmse, Herbert, 87787 Wolfertschwenden (DE); Rädler, Michael, 87439 Kempten (DE); Zettler, Christoph, 88459 Tannheim (DE)
(74) Vertreter: Grünecker Patent- und Rechtsanwälte PartG mbB

(56) Entgegenhaltungen:
- WO-A2-2020/058278
- DE-A1- 2 322 943
- DE-B2- 2 430 497
- DE-B4- 102005 048 491
- DE-B4- 102011 010 601

## Beschreibung

Die Erfindung betrifft eine Verpackungsvorrichtung zur Herstellung einer Verpackung für ein Lebensmittel, welche Verpackung insbesondere ein muldenförmiges Verpackungsunterteil und eine Oberfolie aufweist, welche entlang ihrer Ränder mittels eines Siegelwerkzeugs der Verpackungsvorrichtung miteinander versiegelbar sind.

Eine solche Verpackungsvorrichtung ist beispielsweise in der DE 20 2018 101 469 U1 beschrieben. Die Verpackungsvorrichtung ist Teil einer Tiefziehverpackungsmaschine, welche eine Formstation, eine Einlegestrecke, eine Siegelstation und eine Schneidstation umfasst. Die Siegelstation entspricht im Wesentlichen der der oben beschriebenen Verpackungsvorrichtung. In der Formstation werden mittels Formwerkzeugen muldenförmige Verpackungsteile aus einer Unterfolienbahn hergestellt. In der Siegelstation wird eine Oberfolie zugeführt und die muldenförmigen Verpackungsunterteile werden mittels der Oberfolie verschlossen, indem ein Siegelwerkzeug Verpackungsteil und Oberfolie entlang deren Rändern miteinander versiegelt. Vorher wurde in das muldenförmige Verpackungsteil ein entsprechendes Lebensmittel eingelegt. Dies erfolgt entlang einer Einlegestrecke, entlang welcher ein Lebensmittel als zu verpackendes Produkt in jedes muldenförmige Verpackungsunterteil vor Versiegeln eingelegt wird.

Eine spezifische Behandlung der Verpackung bzw. des Lebensmittels erfolgt bei der DE 20 2018 101 469 U1 in keiner Weise. Stattdessen findet nur das Versiegeln von muldenförmigem Verpackungsunterteil und Oberfolie in der Siegelstation statt.

Die DE 10 2010 048 401 A1 offenbart ebenfalls eine Verpackungsvorrichtung, bei der ein Produkt bzw. Lebensmittel in einem Beutel angeordnet wird und der Beutel an einem seiner Öffnung zuweisenden Beutelhals mittels Siegelschiene und Gegendruckleiste verschlossen wird. Dabei besteht die Möglichkeit, dass innerhalb der Beutels eine modifizierte Atmosphäre erzeugt wird, eine Dampfspülung oder eine Evakuierung stattfindet. In der Regel erfolgt dabei eine Evakuierung des Beutels kurz vor dem Versiegeln, beispielsweise mittels einer Flüssigkeits-Ringpumpe oder dergleichen. Wurde der Beutel vorher dampfgespült, erfolgt bei der Evakuierung ein Absaugen des entstandenen Dampf-Luft-Gemisches im Beutel. Eine Verpackungsvorrichtung gemäß dem Oberbegriff von Anspruch 1 geht aus der DE 23 22 943 A1 hervor.

Die Dampfspülung weist eine Reihe von Vorteilen auf. Beispielsweise kann auf ein Abkühlen des Lebensmittels vor dem eigentlichen Siegelvorgang verzichtet werden. Durch den eingeleiteten Dampf wird Luft und insbesondere Sauerstoff aus der Verpackung verdrängt und dann durch Anlegen eines Unterdrucks das Dampf-Luft-Gemisch abgesaugt. Durch die Dampfspülung können auch etwaige Oberflächenkeime auf dem Lebensmittel abgetötet werden.

Bei dem bisherigen System mit Dampfspülung hat sich allerdings herausgestellt, dass die Pumpen teilweise nicht ausreichend in ihrem Unterdruck zu regeln oder zum Ansaugen von Wasserdampf nicht geeignet sind. Andere Pumpen, die diese Nachteile ggf. nicht aufweisen, sind sehr teuer und daher nicht verwendbar. Probleme ergaben sich außerdem beim Einleiten des Dampfes bzw. beim Anschluss einer Pumpe an die Verpackung.

Der vorliegenden Erfindung liegt daher die Aufgabe zugrunde, ganz ohne Evakuierung oder durch eine Evakuierung in einfacher und kostengünstiger Weise mit nur geringem Unterdruck eine Verpackungsvorrichtung dahingehend zu verbessern, dass eine ausreichende Dampfspülung möglich ist und gleichzeitig ein Abkühlen des Lebensmittels vor dem Versiegeln oder eine zu starke Entgasung des Lebensmittels nicht stattfindet.

Diese Aufgabe wird gelöst durch eine Verpackungsvorrichtung mit den Merkmalen des Anspruchs 1.

Gemäß der Erfindung ist es vorteilhaft, wenn vor dem Versiegeln unter Druck Dampf zumindest an einer Dampfeintrittsstelle zwischen Verpackungsunterteil und Oberfolie einführbar und durch eine Austrittsöffnung in der Verpackung an die umgebende Atmosphäre abgebbar ist. Der Dampf bewegt sich also durch die noch nicht versiegelte Verpackung von der Dampfeintrittsstelle zur Austrittsstelle und tritt dort in die umgebende Atmosphäre aus. Die Dampfspülung der Verpackung erfolgt somit in einfacher Weise ohne teure Pumpen oder dergleichen. Das Lebensmittel kann im heißen Zustand verpackt werden und gleichzeitig erfolgt keine Entgasung des Lebensmittels durch Pumpen. Eine Vakuumpumpe mit entsprechend hohen Kosten wird nicht verwendet.

Die Durchspülung der Verpackung mit Dampf erfolgt im Prinzip nur durch den Druckunterschied zwischen Zufuhr des Dampfes an der Dampfeintrittsstelle und Atmosphärendruck an der Austrittsstelle.

Als weiterhin günstig kann es angesehen werden, wenn eine Dampfquelle der Verpackungsvorrichtung zugeordnet und mit insbesondere der Dampfeintrittsstelle über eine Dampfzuführleitung verbunden ist. Die Dampfquelle ist also direkt der Verpackungsvorrichtung zugeordnet und in der Regel nahe der Dampfeintrittsstelle angeordnet. Eine Dampf-Zuführleitung erstreckt sich von der Dampfquelle bis zur Dampfeintrittsstelle. Die Zuführleitung kann sich dabei teilweise außerhalb des Siegelwerkzeugs, aber auch teilweise im Inneren des Siegelwerkzeugs erstrecken, um auf diese Weise mit der Dampfeintrittsstelle verbunden zu werden.

Insbesondere das Verpackungsunterteil kann zumindest stellenweise einen Randstreifen mit einer Randstreifenlochung aufweisen. Diese ist in einem Randbereich des muldenförmigen Verpackungsunterteils angeordnet und kann in einem späteren Schritt nach Aufsiegeln der Oberfolie entfernt werden, wobei noch ein versiegelter Rand von Verpackungsunterteil und Oberfolie verbleibt. Diese Randlochung kann vor dem Versiegeln die Dampfeintrittsstelle bilden, so dass keine zusätzliche Öffnung zwischen Verpackungsunterteil und Oberfolie vorgesehen werden muss.

In diesem Zusammenhang kann es sich weiterhin als Vorteil erweisen, wenn eine weitere Randstreifenlochung des Verpackungsunterteils die Austrittsstelle bildet.

Erfindungsgemäß sind also keine spezifischen Öffnungen zwischen Verpackungsunterteil und Oberfolie vorgesehen, da einfach über die entsprechenden Randlochungen des Randes des Verpackungsunterteils sowohl die Zufuhr des Dampfes als auch die Abgabe an die Atmosphäre erfolgt.

Im einfachsten Fall können die Randstreifenlochungen für die Dampfeintrittsstelle und die Austrittsstelle einander relativ zur Verpackung gegenüberliegen, d. h. es wird eine entsprechende Randstreifenlochung von zwei einander gegenüberliegenden Randstreifen des Verpackungsunterteils verwendet.

Denkbar ist, dass die Austrittsstelle direkt mit der umgebenden Atmosphäre in Verbindung steht. Ebenfalls möglich ist, dass die Austrittsstelle über eine Abgabeleitung mit der umgebenden Atmosphäre verbunden ist. Diese Abgabeleitung kann zumindest teilweise im Siegelwerkzeug ausgebildet sein, um von der Austrittsstelle der Verpackung die Verbindung zur umgebenden Atmosphäre herzustellen.

Um ggf. einen gewissen Unterdruck in der Verpackung zu ermöglichen, der für ein verbessertes Versiegeln von Verpackungsunterteil und Oberfolie sowie eine bessere Dampfspülung vorteilhaft sein kann, kann gemäß vorliegender Erfindung in der Abgabeleitung eine Venturidüse als Unterdruckmittel angeordnet oder zumindest dieser Abgabeleitung zugeordnet sein. Die Venturidüse dient dazu, einen größeren Druckunterschied zwischen Dampfeintrittsstelle und Austrittsstelle herzustellen, der beispielsweise das Spülen mit Dampf unterstützt und zum verbesserten Versiegeln gleichzeitig einen gewissen Unterdruck in der Verpackung herstellen kann. Die Venturidüse kann beispielsweise immer nur dann eingesetzt werden, wenn auch eine Dampfzufuhr zur Verpackung stattfindet.

Um zu gewährleisten, dass der Dampf auch über mehrere Spuren von Verpackungen der Verpackungsvorrichtung gut verteilt werden kann, ist es ggf. günstig, wenn die Verpackung einen möglichst großen Querschnitt für ein Durchströmen mit dem Dampf oberhalb des Lebensmittels bzw. um das Lebensmittel herum aufweist. Um einen solchen möglichst großen Raum zu ermöglichen, weist das Siegelwerkzeug eine Ansaugleitung auf, die einen Unterdruck zwischen Siegelwerkzeug und Oberfolie zur Schaffung eines Freiraums zwischen Oberfolie und Lebensmitteloberfläche im Verpackungsunterteil herstellt. Dieser Freiraum bildet dann den entsprechend großen Raum zum Durchströmen der Verpackung mit Dampf. Durch den großen Freiraum kann eine ausreichende Menge Dampf in schneller Weise hindurchgeleitet werden. Dadurch ist eine hohe Taktleistung in der Verpackungsvorrichtung zum Durchsatz einer entsprechenden Anzahl von Verpackungen möglich. Ebenfalls kann eine qualitativ bessere Verpackung hergestellt werden.

Der Unterdruck kann beispielsweise durch eine Pumpe oder dergleichen hergestellt werden, wobei in diesem Fall kein Wasserdampf abgepumpt werden muss, sondern nur zwischen Siegelwerkzeug und Oberfolie enthaltene Luft.

Weiterhin kann es sich als vorteilhaft erweisen, wenn weitestgehend verhindert wird, dass Dampf unterhalb der Unterfolie in das Siegelwerkzeug strömt und stattdessen die Unterfolie direkt auf dem Siegelwerkzeug bzw. der Siegeldichtung aufliegt, so dass zwischen beiden keine Luft vorhanden ist. Dazu kann das Siegelwerkzeug eine Absaugleitung aufweisen, die einen Zwischenraum zwischen Siegelwerkzeug und Verpackungsunterteil insbesondere mit der umgebenden Atmosphäre verbindet. Durch das Anordnen des Verpackungsunterteils im Siegelwerkzeug und das Gewicht des Lebensmittels kann dafür gesorgt werden, dass im Wesentlichen Luft aus diesem Zwischenraum an die umgebende Atmosphäre abgegeben wird.

Allerdings ist es in der Regel von Vorteil, wenn ggf. jeweils eine Venturidüse in der Ansaugleitung und/oder der Absaugleitung angeordnet ist. Durch die Venturidüse wird die Oberfolie nach oben gesaugt, um den Freiraum sicher zu schaffen bzw. das Verpackungsunterteil durch Evakuierung des entsprechenden Zwischenraums an das Siegelwerkzeug heranzuziehen. Durch diese letztgenannten Maßnahmen wird weiterhin sichergestellt, dass Dampf komplett durch die Randstreifenlochung in die Verpackung gelangt und weder oberhalb der Oberfolie noch unterhalb des Verpackungsunterteils hindurch strömt. Stattdessen wird ein ausreichend großer Freiraum zwischen Oberfolie und Lebensmitteloberfläche geschaffen und ein sauberes Aufliegen des Verpackungsunterteils auf dem Siegelwerkzeug wird sichergestellt. Letzteres wird ebenfalls durch die Masse des Lebensmittels in der Verpackung unterstützt. Diese Masse kann jedoch unter Umständen nicht gleichmäßig verteilt oder nicht ausreichend schwer sein.

Um zu verhindern, dass Löcher der Randstreifenlochung sich durch eine Kombination aus thermischer Belastung durch den Dampf und mechanischer Belastung durch die Masse des Lebensmittels zu sehr weiten, kann eine Auflageeinrichtung zumindest stellenweise im Siegelwerkzeug zur Auflage des Verpackungsunterteils ausgebildet sein, d.h., das Siegelwerkzeug stützt das Verpackungsunterteil ab, so dass der Boden des Verpackungsunterteils auf der Auflageeinrichtung aufliegt und dadurch die Belastung der Löcher der Randstreifenlochung sowohl auf Seiten der Dampfeintrittsstelle als auch der Austrittsstelle verhindert wird.

Es kann sich weiterhin als günstig erweisen, wenn in der Dampfzuführleitung ein Schaltventil, insbesondere ein Drei-Wege-Ventil, angeordnet ist. Durch einfaches Umschalten dieses Ventils kann dann einerseits die Dampfzufuhr zur Dampfeintrittsstelle, eine Unterbrechung der Dampfzufuhr oder auch eine Dampfzufuhr zu einer anderen Leitung erfolgen. Diese andere Leitung kann beispielsweise dazu dienen, den Dampf in umgekehrter Weise durch die Verpackung zu leiten, d.h. dass die Dampfzufuhr über die Austrittsstelle erfolgt und der Austritt des Dampfes über die Dampfeintrittsstelle. Durch entsprechendes Umschalten des Ventils kann somit die Verpackung in unterschiedliche Richtungen mit Dampf geflutet werden. Es besteht ebenfalls die Möglichkeit, dass die andere Leitung beispielsweise mit einer anderen Verpackungsvorrichtung verbunden ist, so dass mittels einer Dampfquelle entsprechend getaktet unterschiedliche Verpackungsvorrichtungen versorgt werden können. Ebenso kann beispielsweise ein Zwei-Wege-Ventil nur zur Dampfzufuhr und Unterbrechung der Dampfzufuhr angeordnet werden.

Im einfachsten Fall kann Dampf in Form von Wasserdampf zugeführt werden, so dass die Dampfquelle eine Wasserdampfquelle sein kann.

Erfindungsgemäß besteht ebenfalls die Möglichkeit, dass mehrere Verpackungen hintereinander und/oder nebeneinander in der Verpackungsvorrichtung angeordnet sind. Diese Verpackungen können in der oben beschriebenen Weise dampfgespült werden.

Die Verpackungsvorrichtung kann weiterhin dazu ausgebildet sein, das Verpackungsunterteil durch Tiefziehen einen Unterfolie selbst herzustellen. Die Dampfspülung erfolgt dann nach Einlegen des Lebensmittels in das aus der Unterfolie hergestellte Verpackungsunterteil.

Erfindungsgemäß ergibt sich somit eine Verpackungsvorrichtung, die ein kostengünstiges System zur Dampfspülung bereitstellt. Dazu ist es in der Regel ausreichend, eine solche Dampfspülung ohne jeglichen Unterdruck, d.h. ohne aktives Absaugen des Dampfes durchzuführen. Werden ein entsprechender Unterdruck oder ein zusätzliches Absaugen benötigt, erfolgt dies über einfache Venturidüsen ohne Anordnung von teuren Vakuumpumpen oder dergleichen. Bei Venturidüsen ist außerdem sichergestellt, dass diese in keiner Weise durch Ansaugen von Wasserdampf geschädigt werden.

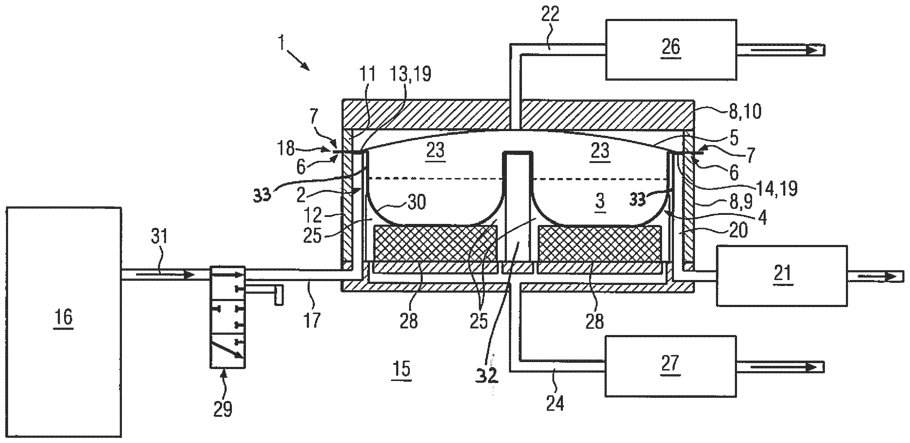

Im Folgenden wird ein vorteilhaftes Ausführungsbeispiel der Erfindung anhand der beigefügten Figur näher beschrieben. Es zeigt
Fig. 1 eine Prinzipdarstellung einer erfindungsgemäßen Verpackungsvorrichtung.

Fig. 1 zeigt eine Prinzipdarstellung einer erfindungsgemäßen Verpackungsvorrichtung 1 als Teil einer Vorrichtung mit beispielsweise Formstation, Einlegestrecke, Siegelstation und Schneidstation. Die erfindungsgemäße Verpackungsvorrichtung 1 entspricht dabei der Siegelstation.

Die Verpackungsvorrichtung 1 ist im Querschnitt senkrecht zur Transportrichtung der Verpackungen 2 dargestellt. Die Verpackungsvorrichtung 1 umfasst ein Werkzeugoberteil 10 als Siegelwerkzeug 8 und ein Werkzeugunterteil 9 als Abstützeinrichtung.

In die Verpackung 2 ist bereits ein Lebensmittel 3 eingelegt, das die zu verschließende Verpackung 2 teilweise füllt. Je nach Ausführungsbeispiel der Verpackungsvorrichtung 1 können mehrere Verpackungen 2 neben-/hintereinander angeordnet sein und gleichzeitig versiegelt werden. Jede der Verpackungen 2 besteht aus einem muldenförmigen Verpackungsunterteil 4, auf das eine Oberfolie 5 aufgesiegelt wird. Die Versiegelung erfolgt anhand von Rändern 6, 7 des Verpackungsunterteils 4 und der Oberfolie 5. In der Darstellung nach Fig. 1 sind die Ränder 6, 7 bereits durch eine Klemmleiste 11 und eine Gegendruckleiste 12 relativ zueinander fixiert, während eine Randstreifenlochung 19 im Randstreifen 18 des Randes 6 des Verpackungsunterteils 4 noch offen ist.

Die Randstreifenlochung 19 steht in Verbindung mit einer Dampfzuführleitung 17, die in Randstreifenrichtung schlitzförmig ausgebildet sein kann, um verschiedenen Löchern der Randstreifenlochung 19 zugeordnet zu sein . Auf der gegenüberliegenden Seite der Verpackung 2 sind die Ränder 6, 7 analog zueinander angeordnet und auch dort ist eine Randstreifenlochung 19 im Randstreifen 18 ausgebildet. Diese Randstreifenlochung steht mit einer Abgabeleitung 20 in Verbindung.

Im Bereich der Randstreifenlochung 19 ist auf der linken Seite von Fig. 1 eine Dampfeintrittsstelle 13 ausgebildet, durch welche über die Dampfzuführleitung 17 zugeführter Dampf ins Innere der Verpackung 2 eintritt. Analog bildet die Randstreifenlochung 19 auf der gegenüberliegenden Seite eine Austrittsstelle 14 für den Dampf zur Abgabe an die umgebende Atmosphäre 15.

Die Leitungen - Dampfzuführleitung 17 bzw. Abgabeleitung 20 - erstrecken sich teilweise innerhalb des Werkzeugunterteils 9, wobei die Dampfzuführleitung 17 mit einer Dampfquelle 16 verbunden ist. Über diese kann in Dampfzuführrichtung 31 entsprechend Dampf, insbesondere in Form von Wasserdampf, dem Inneren der Verpackung 2 zugeführt werden. Die Abgabeleitung 20 erstreckt sich seitlich weg vom Werkzeugunterteil 9, wobei eine Venturidüse 21 in der Abgabeleitung 20 angeordnet ist. Diese Venturidüse 21 wird in an sich bekannter Weise so betrieben, dass sie einen Unterdruck bezüglich der Abgabeleitung 20 erzeugt, so dass eine Saugwirkung für Luft, Dampf oder entsprechend modifizierte Atmosphäre innerhalb der Verpackungsvorrichtung 1 bereitgestellt wird. Über diese Venturidüse 21 erfolgt die Abgabe an die umgebende Atmosphäre 15.

Innerhalb des Werkzeugunterteils 9 sind weiterhin Auflageeinrichtungen 28 angeordnet, die das muldenförmige Verpackungsunterteil 4 von unten abstützen. Ein flächiges und möglichst vollständiges Aufliegen des Verpackungsunterteils 4 auf der Auflageeinrichtung 28 erfolgt einerseits durch ein Gewicht des eingefüllten Lebensmittels 3 und andererseits durch einen zwischen Unterseite des Verpackungsunterteils 4 und Oberfläche des Werkzeugunterteils 9 gebildeten Unterdruck in einem entsprechenden Zwischenraum 25 zwischen diesen. Jeweils beidseitig zur Auflageeinrichtung 28 sind Öffnungen angeordnet, die mit einer Abgabeleitung 24 verbunden sind. In dieser kann ebenfalls eine Venturidüse 27 angeordnet sein, um einen Unterdruck im Zwischenraum 25 herzustellen. Zwischen den beiden Auflageeinrichtungen 28 ist ein Steg 32 angeordnet, der zwei Abteile einer Verpackung 2 bzw. zwei nebeneinander angeordnete Verpackungen 2 voneinander trennt. Auch auf der Oberseite des Steges 32 kann eine Versiegelung zwischen Verpackungsunterteil und Oberfolie erfolgen.

Das eigentliche Versiegeln der Ränder von Verpackungsunterteil 4 und Oberfolie 5 erfolgt im Wesentlichen durch ein Zusammenwirken einer nicht dargestellten Siegelschiene und Randstegen 33 des Werkzeugunterteils 9 bzw. Werkzeugoberteils 10.

Die seitlich in Fig. 1 dargestellte Dampfquelle 16 erzeugt Wasserdampf, der mit einem gewissen Überdruck in Dampfzufuhrrichtung 31 über die Dampfzuführleitung 17 ins Innere der Verpackung 2 gedrückt wird. Dies erfolgt über die bereits oben genannte Randstreifenlochung 19 und die dadurch gebildete Dampfeintrittsstelle 13. Nach Durchströmen der Verpackung 2 tritt der Dampf mit ggf. übriger Atmosphäre aus der Verpackung 2 über die weitere Randstreifenlochung und Austrittsstelle 14 in die Abgabeleitung 20 ein und über diese in die umgebende Atmosphäre 15 aus.

Um insbesondere während des Durchströmen des Dampfes einen entsprechend großen Freiraum im Inneren der Verpackung 2 aufrechterhalten zu können, weist das Werkzeugoberteil 10 eine Öffnung mit angeschlossener Ansaugleitung 22 auf. Auch diese kann über eine entsprechende Venturidüse 26 mit der umgebenden Atmosphäre 15 verbunden sein. Über die Ansaugleitung 22 kann ein Unterdruck zwischen Oberfolie und Werkzeugoberteil 10 erzeugt werden, der einen entsprechend großen Freiraum 23 zwischen der Unterseite der Oberfolie 5 und der Oberseite des Lebensmittels 3 herstellt. Dadurch ergibt sich eine verbesserte Durchströmung des Inneren der Verpackung 2 durch den Dampf.

Die Venturidüsen 21, 26, 27 können alle im Wesentlichen gleichartig aufgebaut sein.

Weiterhin ist in der Dampfzuführleitung 17 ein Schaltventil 29, insbesondere in Form eines Drei-Wege-Ventils oder eines Zwei-Wege-Ventils angeordnet. In der dargestellten Stellung des Schaltventils 29 erfolgt eine Dampfzufuhr in Dampfzuführrichtung 31 in das Innere der Verpackung 2. In einer weiteren Stellung ist das Schaltventil 29 in Sperrstellung, so dass kein Dampf aus der Dampfquelle 16 in Richtung der Verpackung 2 transportiert wird. In der letzten Stellung ist zwar die Dampfquelle 16 von der Dampfzuführleitung 17 getrennt, allerdings erfolgt die Abgabe von Dampf beispielsweise zu einer weiteren, nicht dargestellten Verpackungsvorrichtung 1 oder ggf. auch in einer solchen Weise, dass der Dampf in umgekehrter Richtung durch die Verpackung 2 strömt, indem beispielsweise die Dampfquelle 16 mit der Austrittsstelle 14 verbunden wird und Dampf über die Dampfeintrittsstelle 13 in die umgebende Atmosphäre austritt.

Es besteht weiterhin die Möglichkeit, dass das muldenförmige Verpackungsunterteil 4 analog zur Oberfolie 5 aus einer Unterfolie 30 gebildet ist. Das Verpackungsunterteil wird dabei durch Tiefziehen der Unterfolie 30 gebildet, bevor das Lebensmittel eingelegt wird.

## Patentansprüche

1. Verpackungsvorrichtung (1) zur Herstellung einer Verpackung (2) für ein Lebensmittel (3), welche Verpackung (2) insbesondere ein muldenförmiges Verpackungsunterteil (4) und eine Oberfolie (5) aufweist, welche entlang ihrer Ränder (6,7) mittels eines Siegelwerkzeugs (8) der Verpackungsvorrichtung (1) miteinander versiegelbar sind, wobei zumindest an einer Dampfeintrittsstelle (13) vor dem Versiegeln Dampf zwischen Verpackungsunterteil (4) und Oberfolie (5) unter Druck einführbar und an einer Austrittsstelle (14) aus der Verpackung (2) in die umgebende Atmosphäre (15) abgebbar ist
**dadurch gekennzeichnet, dass** das Siegelwerkzeug (8) eine Ansaugleitung (22) aufweist, mittels derer ein Unterdruck zwischen Siegelwerkzeug und Oberfolie (5) zum Schaffen eines Freiraums (23) zwischen Oberfolie (5) und Lebensmitteloberfläche in dem Verpackungsunterteil (4) herstellbar ist.

2. Verpackungsvorrichtung nach Anspruch 1, wobei eine Dampfquelle (16) der Verpackungsvorrichtung (1) zugeordnet und mit insbesondere der Dampfeintrittsstelle (13) über eine Dampfzuführleitung (17) verbunden ist.

3. Verpackungsvorrichtung nach einem der vorangehenden Ansprüche, wobei die Austrittsstelle (14) über eine Abgabeleitung (20) mit der umgebenden Atmosphäre (15) verbunden ist und insbesondere in der Abgabeleitung (20) eine Venturidüse (21) als Unterdruckmittel angeordnet ist.

4. Verpackungsvorrichtung nach einem der vorangehenden Ansprüche, wobei das Siegelwerkzeug (8) eine Absaugleitung (24) aufweist, die einen Zwischenraum (25) zwischen Siegelwerkzeug und Verpackungsunterteil (4) insbesondere mit der umgebenden Atmosphäre (15) verbindet.

5. Verpackungsvorrichtung nach einem der vorangehenden Ansprüche, wobei jeweils eine Venturidüse (26, 27) in der Ansaugleitung (22) und/oder der Absaugleitung (24) angeordnet ist.

6. Verpackungsvorrichtung nach einem der vorangehenden Ansprüche, wobei eine Auflageeinrichtung (28) zumindest stellenweise im Siegelwerkzeug (8) zur Auflage des Verpackungsunterteils (4) ausgebildet ist.

7. Verpackungsvorrichtung nach einem der vorangehenden Ansprüche, wobei in der Dampfzuführleitung (17) ein Schaltventil (29), insbesondere ein Drei-Wege-Ventil oder Zwei-Wege-Ventil, angeordnet ist.

8. Verpackungsvorrichtung nach einem der vorangehenden Ansprüche, wobei die Dampfquelle (16) eine Wasserdampfquelle ist.

## Claims

1. Packaging device (1) for manufacturing a packaging (2) for a foodstuff (3), said packaging (2) in particular comprising a trough-shaped lower packaging part (4) and a top film (5), which can be sealed to one another along their edges (6, 7) by means of a sealing tool (8) of the packaging device (1), wherein vapor can be introduced under pressure between the lower packaging part (4) and the top film (5) at least at a vapor inlet point (13) before sealing and can be released from the packaging (2) into the surrounding atmosphere (15) at an outlet point (14),
**characterised in that** the sealing tool (8) comprises a suction line (22) by means of which a negative pressure can be generated between the sealing tool and the top film (5) for creating a space (23) between the top film (5) and the foodstuff surface in the packaging lower part (4).

2. Packaging device according to claim 1, wherein a vapor source (16) is associated with the packaging device (1) and connected to, in particular, the vapor inlet point (13) via a vapor supply line (17).

3. Packaging device according to one of the preceding claims, wherein the outlet point (14) is connected to the surrounding atmosphere (15) via a discharge line (20) and, in particular, a Venturi nozzle (21) is arranged in the discharge line (20) as a negative pressure means.

4. Packaging device according to one of the preceding claims, wherein the sealing tool (8) comprises a suction line (24) which connects a space (25) between the sealing tool and the lower packaging part (4) in particular to the surrounding atmosphere (15).

5. Packaging device according to one of the preceding claims, wherein a Venturi nozzle (26, 27) is arranged in each of the suction line (22) and/or the extraction line (24).

6. Packaging device according to one of the preceding claims, wherein a support device (28) is formed at least in places in the sealing tool (8) for supporting the lower packaging part (4).

7. Packaging device according to one of the preceding claims, wherein a switching valve (29), in particular a three-way valve or two-way valve, is arranged in the vapor supply line (17).

8. Packaging device according to one of the preceding claims, wherein the vapor source (16) is a source of water vapor.

## Revendications

1. Dispositif d'emballage (1) pour la fabrication d'un emballage (2) destiné à un produit alimentaire (3), lequel emballage (2) présente en particulier une partie inférieure d'emballage (4) en forme de cuvette et un film supérieur (5) qui peuvent être scellés ensemble le long de leurs bords (6, 7) au moyen d'un outil de scellage (8) du dispositif d'emballage (1), de la vapeur (13) pouvant être introduite sous pression entre la partie inférieure d'emballage (4) et le film supérieur (5) au moins au niveau d'un point d'entrée de vapeur avant le scellage et pouvant être évacuée de l'emballage (2) dans l'atmosphère environnante (15) au niveau d'un point de sortie (14),
**caractérisé en ce que** l'outil de scellage (8) présente une conduite d'aspiration (22) au moyen de laquelle une sous-pression peut être générée entre l'outil de scellage et le film supérieur (5) afin de créer un espace libre (23) entre le film supérieur (5) et la surface du produit alimentaire situé dans la partie inférieure d'emballage (4).

2. Dispositif d'emballage selon la revendication 1, dans lequel une source de vapeur (16) est associée au dispositif d'emballage (1) et est reliée en particulier au point d'entrée de vapeur (13) par l'intermédiaire d'une conduite d'alimentation en vapeur (17).

3. Dispositif d'emballage selon l'une quelconque des revendications précédentes, dans lequel le point de sortie (14) est relié à l'atmosphère environnante (15) par l'intermédiaire d'une conduite d'évacuation (20), et un tube de Venturi (21) faisant office de moyen de sous-pression est en particulier agencé dans la conduite d'évacuation (20).

4. Dispositif d'emballage selon l'une quelconque des revendications précédentes, dans lequel l'outil de scellage (8) présente une conduite de succion (24) qui relie un espace interstitiel (25) situé entre l'outil de scellage et la partie inférieure d'emballage (4) avec en particulier l'atmosphère environnante (15).

5. Dispositif d'emballage selon l'une quelconque des revendications précédentes, dans lequel un tube de Venturi (26, 27) est agencé dans la conduite d'aspiration (22) et/ou dans la conduite de succion (24).

6. Dispositif d'emballage selon l'une quelconque des revendications précédentes, dans lequel un dispositif de support (28) est formé au moins par endroits dans l'outil de scellage (8) afin de supporter la partie inférieure d'emballage (4).

7. Dispositif d'emballage selon l'une quelconque des revendications précédentes, dans lequel une soupape de commutation (29), en particulier une soupape à trois voies ou une soupape à deux voies, est agencée dans la conduite d'alimentation en vapeur (17).

8. Dispositif d'emballage selon l'une quelconque des revendications précédentes, dans lequel la source de vapeur (16) est une source de vapeur d'eau.
